# EUROPÄISCHE PATENTSCHRIFT

(11) **EP 0 786 372 B1**
(45) Veröffentlichungstag und Bekanntmachung des Hinweises auf die Patenterteilung: **11.12.2002**
(21) Anmeldenummer: 97100164.9
(22) Anmeldetag: 08.01.1997
(51) Int. Cl.: B60N 2/46

(54) **Schwenkbare Armlehne für Kraftfahrzeugsitze**
Hinged armrest for automotive vehicle seats
Accoudoir pivotable pour sièges de véhicules automobiles

(30) Priorität: 27.01.1996 DE 19602957
(43) Veröffentlichungstag der Anmeldung: 30.07.1997
(73) Patentinhaber: Volkswagen Aktiengesellschaft, 38436 Wolfsburg (DE)
(72) Erfinder: Junige, Bert, Dipl.-Ing., 38543 Hillerse (DE); Bollmann, Ralf, 38120 Braunschweig (DE); Delling, Gerhard, Dipl.-Ing., 92546 Schmidgaden (DE); Himmelhuber, Erwin, 92237 Sulzbach-Rosenberg (DE); Kühltau, Fritz, 92224 Amberg (DE); Meier, Robert, 92278 Illschwang (DE); Meyer, Thomas, 92224 Amberg (DE)

(56) Entgegenhaltungen:
- EP-A- 0 466 221
- DE-U- 29 503 304
- US-A- 4 601 515
- US-A- 5 362 131

## Beschreibung

Die Erfindung betrifft eine schwenkbare Armlehne für Kraftfahrzeugsitze, insbesondere eine Mittelarmlehne.

Schwenkbare Armlehnen für Kraftahrzeugsitze sind bekannt. Es ist auch bekannt, diese Armlehnen zur Aufbewahrung von Gegenständen oder im Fahrzeug unterzubringenden Geräten zu nutzen.

So ist im Gebrauchsmuster DE 90 11 379.9 U1 eine schwenkbare Armlehne mit eingebauter Fernseh-Video-Kombination beschrieben, wobei das Fernseh-Video-Gerät in einem in die Armlehne eingebauten Gehäuse mit einem das Gerät aufnehmenden und ausfahrbaren Boden untergebracht ist, der auf Führungsschienen gelagert und mittels eines Motors aus- und eingefahren werden kann.

Im Gebrauchsmuster DE 295 03 304.5 U1 ist eine schwenkbare Armlehne für Kraftfahrzeugsitze beschrieben, die mit zwei als Tragteil fungierenden Wandteilen an einer raumfesten sitzseitigen Halterung (Stützfuß), die zwei gegenüberliegend angeordnete Schwenklagerteile aufweist, schwenkbar gelagert ist, wobei an den Schwenklagerteilen konzentrisch angeordnete Rastzähne zur Schwenkpositionierung der Armlehne angeordnet sind. Die Armlehne weist neben den tragenden Wandteilen zwei weitere, innere Wandteile auf, die einerseits einen Aufnahmeraum (Stauraum) für aufzubewahrende Gegenstände begrenzen und die andererseits jeweils mit der benachbarten tragenden Wand einen Aufnahmeraum für eine mit einem Bedienteil gekoppelte Betätigungsmechanik für eine mit den Rastzähnen in Wirkverbindung stehende Gegenrast umschließen. Die inneren Wandteile tragen überdies ein Armauflageteil mit Armpolster. Der zwischen den inneren Wandteilen angeordnete Stauraum ist halterungsseitig (stützfußseitig) durch das an der Halterung ausgebildete Schwenkgelenk begrenzt.

Es ist Aufgabe der Erfindung, eine schwenkbare Armlehne für Kraftfahrzeuge zu schaffen, in der ein Stauraum mit einem vergrößerten Raumangebot zur Aufbewahrung von Gegenständen angeordnet ist.

Diese Aufgabe wird bei einer schwenkbaren Armlehne nach dem Oberbegriff des Anspruchs 1 durch dessen kennzeichnende Merkmale gelöst. Dadurch, daß der Stützfuß armlehnenseitig zwei beabstandete und eine Haltegabel bildende Seitenteile aufweist, zwischen und an denen das Armlehnentragteil schwenkbar gelagert ist, und daß die gelenkige Verbindung zwischen dem Armlehnentragteil und den Seitenteilen des Stützfußes durch ein achs- und wellenloses Schwenkgelenk - vorzugsweise in Schalenbauweise - gegeben ist, steht für die Anordnung und Ausdehnung eines Stauraumes auch der Raum zwischen den Seitenteilen des Stützfußes und damit im wesentlichen die gesamte Armlehne zur Verfügung.

Das Armlehnentragteil kann als tragendes Bauteil zwei Tragarme aus einem festen Material, beispielsweise Aluminium, mit Gelenkschalen aufweisen, an dem sich auf einfache Weise eine Armlehnenverkleidung und eine einen Stauraum bildende Ablageschale anordnen lassen, wobei letztere so gestaltet ist, daß sie den Bereich zwischen den Seitenteilen des Stützfußes ausfüllt.

Die Gelenkschalen und die Gelenköpfe bzw. -buchsen oder -zapfen können am Armlehnentragteil und an den Seitenteilen des Stützfußes vorteilhaft integriert ausgebildet sein, was sowohl die Herstellung als auch die Montage der Armlehnenanordnung erleichtert.

Zur Schwenkpositionierung des Armlehnentragteils bzw. der Armlehne können an den Seitenteilen des Stützfußes gemäß Anspruch 5 im Abstand und konzentrisch zu den Ringaufnahmen mit Rastzähnen versehene Rastkörper für ein Gegenrastelement angeordnet sein, wobei es montageerleichternd ist, diesen Rastkörper am Stützfuß einstückig auszubilden.

Als Gegenrastelement kann eine zwischen den Tragarmen im Schwenkgelenkbereich drehbeweglich gelagerte und federkraftbeaufschlagte Verriegelungsklinke angeordnet sein, die auf einfache Weise durch ein Betätigungselement gegen die Federkraft aus ihrer Verriegelungsstellung bringbar ist. Zweckmäßig ist es dabei, die Verriegelungsklinke über eine Schubstange mit einer an der Armlehnenstirnseite angeordneten Drucktaste zu koppeln, da eine solche Anordnung die Schwenkpositionierung erleichtert und dadurch auch die Armlehne in einer zwischen den Sitzlehnen gegebenen Postion betätigbar bleibt.

Die Ablageschale kann zweckmäßigerweise durch einen Deckel verschließbar sein, auf dem das Armauflageteil fest angeordnet ist. Der Deckel ist vorteilhaft so angeordnet, daß er in der Abdeck- bzw. Schließstellung fest verriegelt ist, wobei er mit einer federkraftbeaufschlagten Verriegelungstaste in Wirkverbindung steht, die, wie die Drucktaste für die Verriegelungsklinke, an der Armlehnenstirnseite angeordnet ist.

Zur Verbeserung des optischen Bildes kann der Stützfuß einschließlich seiner Seitenteile verkleidet sein.

Die Erfindung wird nachstehend an einem Ausführungsbeispiel erläutert. In der zugehörigen Zeichnung zeigen:
- Fig. 1:: ein Armlehnentragteil einer erfindungsgemäßen Armlehne,
- Fig. 2:: einen Stützfuß zur schwenkbaren Anordnung des Armlehnentragteils,
- Fig. 3:: Lagerbuchsen für die Schwenklagerung,
- Fig. 4:: eine Verriegelungsklinke für die Schwenkpositionierung,
- Fig. 5:: eine einen Stauraum bildende Ablageschale,
- Fig. 6:: eine Armlehnenverkleidung und
- Fig. 7:: die Armlehne im Längsschnitt.

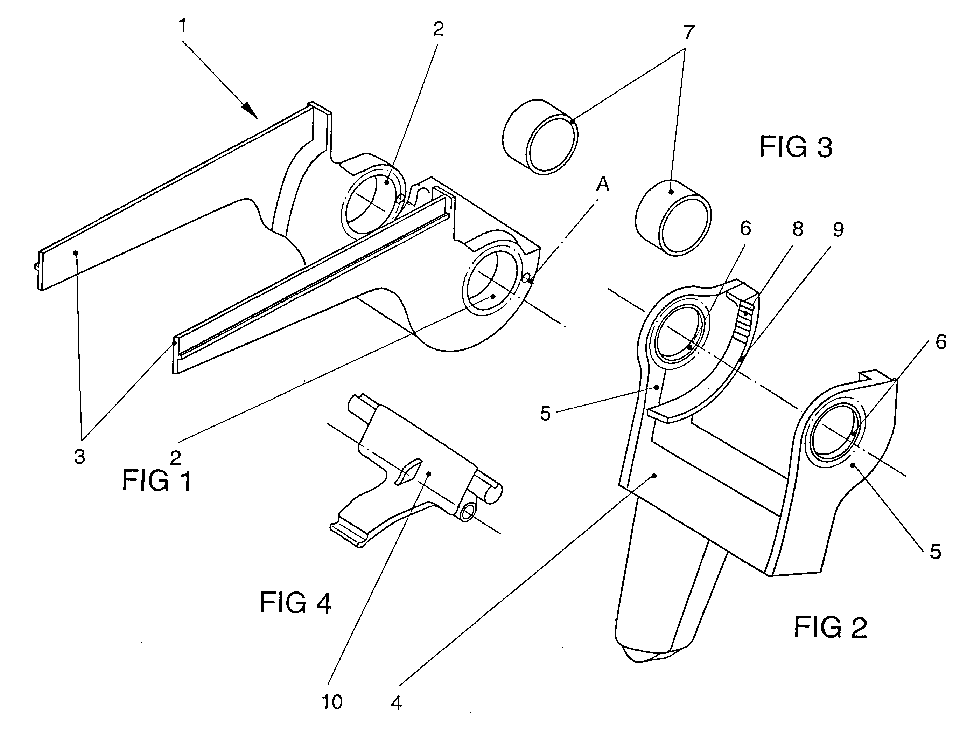

Fig. 1 zeigt ein Armlehnentragteil 1 einer erfindungsgemäßen schwenkbaren Armlehne. Diese besteht im wesentlichen aus zwei parallel zueinander angeordneten und mit Gelenkschalen 2 versehenen Tragarmen 3 zur schwenkbaren Anordnung an einem in Fig. 2 gezeigten Stützfuß 4. Der Stützfuß 4 weist armlehnentragteilseitig zwei beabstandete Seitenteile 5 mit jeweils einer Ringaufnahme 6 für die in Fig. 3 dargestellten Lagerbuchsen 7 und fahrzeugbodenseitig eine Tragsäule 8 zur raumfesten Anordnung an einer nicht dargestellten Konsole auf. Das Armlehnentragteil 1 ist im montierten Zustand zwischen den Seitenteilen 5 angeordnet und auf den in die Ringaufnahme 6 eingeführten Lagerbuchsen 7 achs- und wellenlos schwenkbar gelagert, wodurch der Raum zwischen den Tragarmen 3 frei ist.

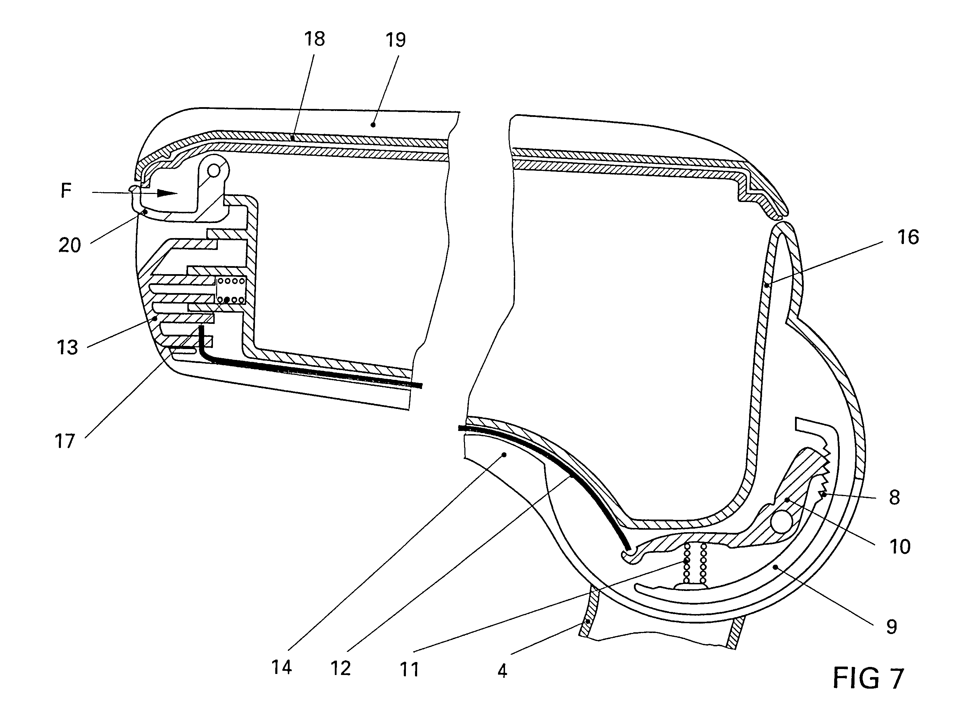

An den Seitenteilen 5 ist jeweils ein mit Rastzähnen 8 versehener Rastkörper 9 konzentrisch im Abstand zu den Ringaufnahmen 6 ausgebildet, an dem eine in Fig. 4 dargestellte und auf der den Tragarmen 3 abgewandten Seite dieser Ringaufnahmen 6 im Abstand von den Lagerbuchsen 7 drehbeweglich bei A gelagerte Verriegelungsklinke 10 als Gegenrastelement eingreift. Diese Verriegelungsklinke 10 ist, wie aus Fig. 7 ersichtlich ist, in Richtung des Rastkörpers 9 durch eine Druckfeder 11 federkraftbeaufschlagt und über eine Schubstange 12 mit einer als Betätigungselement dienenden und ebenfalls federkraftbeaufschlagten Drucktaste 13 gekoppelt, die an der Armlehnenstirnseite angeordnet ist.

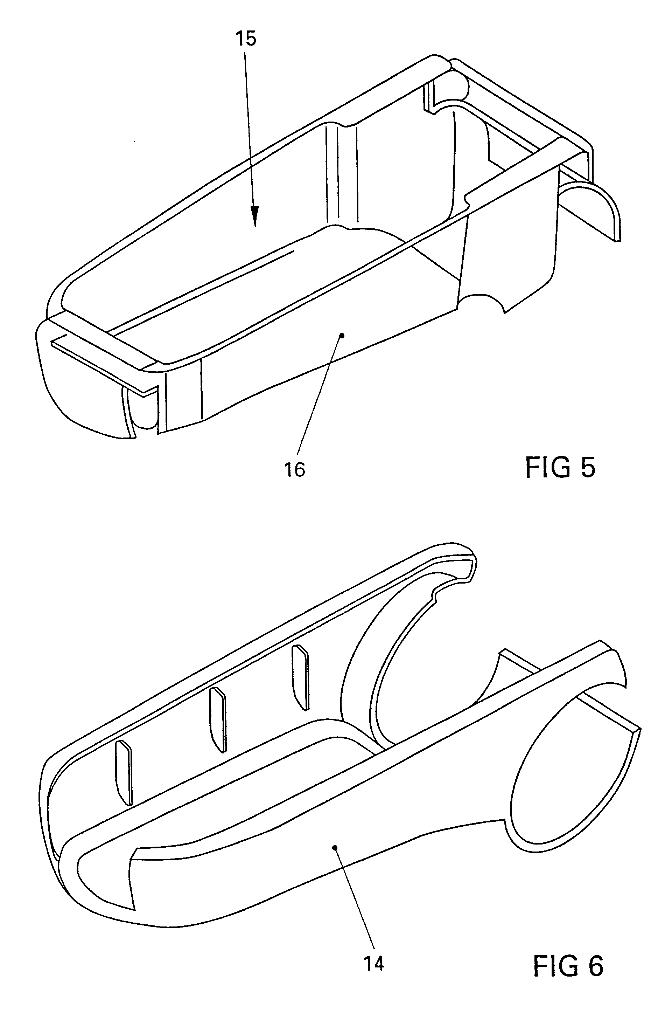

Die Tragarme 3 sind Halterung für eine Armlehnenverkleidung 14 gemäß Fig. 4 und eine in den Raum zwischen diese ragende und einen Stauraum 15 begrenzende Ablageschale 16 nach Fig. 5. Die Ablageschale 15 ist so ausgebildet, daß sie auch in den Bereich des Schwenkgelenkes zwischen die Gelenkschalen 2 reicht und so einen wesentlichen Teil des Raumes zwischen den Seitenteilen 5 des Stützfußes 4 einnimmt. Erwähnt sei, daß der Stützfuß 4 eine Verkleidung aufweist (nicht dargestellt), die die Armlehnenverkleidung im Bereich des Schwenkgelenkes seitlich mit abdeckt, wodurch jedoch eine Veränderung der Schwenkpostion der Armlehne nicht beeinträchtigt wird.

Fig. 7 zeigt einen Schnitt durch eine montierte schwenkbare Armlehne. Zu erkennen ist, daß die Ablageschale 16 einen wesentlichen Teil des Raumes im Schwenkgelenkbereich bzw. zwischen den Seitenteilen 5 des Stützfußeses 4 ausfüllt. Die Verriegelungsklinke 10 ist durch die Drucktaste 13, die durch die Druckfeder 17 beaufschlagt ist, betätigbar und durch eine Betätigung der Drucktaste 13 aus der Verrastung mit dem Rastkörper 9 lösbar, wodurch die Schwenkpostion des Armlehnentragteils 1 gegenüber dem Stützfuß 4 geändert werden kann. Die Ablageschale 16 ist durch einen Deckel 18 verschlossen, an dem ein gepolstertes Armauflageteil 19 fest angeordnet ist. Dieser Deckel ist durch eine federkraftbeaufschlagte (F) Verriegelungstaste 20 in der gezeigten Schließstellung gehalten. Die durch den Deckel 18 verschlossene Ablageschale 16 kann zur Aufbewahrung von Zubehör, wie Brille, Stadtplan oder Handy, genutzt werden.

## Patentansprüche

1. Schwenkbare Armlehne für Kraftfahrzeugsitze mit einem Armlehnentragteil (1), einem Armauflageteil (19) und einem Stauraum (15), wobei das Armlehnentragteil (1) zur schwenkbaren Anordnung an einem raumfesten Stützfuß (4) gelenkig mit diesem verbunden ist, mit am Stützfuß (4) in einem vorbestimmten Winkelbereich konzentrisch um die Schwenkachse raumfest angeordneten Rastzähnen (8) und einem am Armlehnentragteil (1) betätigbar angeordneten und mit den Rastzähnen (8) in Wirkverbindung stehenden Gegenrastelement zur Schwenkpositionierung des Armlehnentragteils (1), dadurch gekenzeichnet, daß der Stützfuß (4) armlehnenseitig zwei beabstandete Seitenteile (5) zur schwenkbaren Lagerung des Armlehnentragteils (1) aufweist, und daß zur gelenkigen Verbindung zwischen diesem und den Seitenteilen (5) ein achs- und wellenloses Schwenkgelenk, vorzugsweise in Schalenbauweise, ausgebildet ist.

2. Armlehne nach Anspruch 1, **dadurch gekennzeichnet, daß** das Armlehnentragteil (1) zwei im wesentlichen im Abstand der Stauraumbreite parallel zueinander angeordnete und mit Gelenkschalen (2) versehene Tragarme (3) aufweist, mit denen es zwischen den Seitenteilen (5) auf zwei dort in jeweils einer Ringaufnahme (6) angeordneten Lagerbuchsen (7) schwenkbar gelagert ist.

3. Armlehne nach Anspruch 1 oder 2, **dadurch gekennzeichnet, daß** die Gelenkschalen (2) und die Gelenkköpfe bzw. -zapfen oder -buchsen (7) jeweils integraler Bestandteil der Seitenteile (5) des Stützfußes (4) und des Armlehnentragteils (1) sind.

4. Armlehne nach Anspruch 1 oder 2, **dadurch gekennzeichnet, daß** die Tragarme (3) Halterung für eine Armlehnenverkleidung (14) sind, an der eine in den Raum zwischen diese ragende und den Stauraum (15) bildende Ablageschale (16) anordbar ist, die auch den Bereich zwischen den Seitenteilen (5) des Stützfußes (4) ausfüllt.

5. Armlehne nach Anspruch 2, **dadurch gekennzeichnet, daß** an den Seitenteilen (5) im Abstand zu den Ringaufnahmen (6) jeweils ein mit Rastzähnen versehener Rastkörper (9) für das Gegenrastelement angeordnet ist.

6. Armlehne nach Anspruch 5, **dadurch gekennzeichnet, daß** der Stützfuß (4) mit den Seitenteilen (5) und den an diesen angeordneten Rastkörpern (9) einstückig ausgebildet ist.

7. Armlehne nach Anspruch 1 oder 5, **dadurch gekennzeichnet, daß** das Gegenrastelement eine zwischen den Tragarmen (3) im Schwenkgelenkbereich drehbeweglich gelagerte und in Richtung des Rastkörpers (9) federkraftbeaufschlagte und betätigbare Verriegelungsklinke (10) ist.

8. Armlehne nach Anspruch 7, **dadurch gekennzeichnet, daß** die Verriegelungsklinke (10) durch eine Schubstange (12) betätigbar ist, die mit einer an der Armlehnenstirnseite angeordneten Drucktaste (13) gekoppelt ist.

9. Armlehne nach Anspruch 4, **dadurch gekennzeichnet, daß** die Ablageschale (16) durch einen das Armauflageteil (19) tragenden Deckel (18) verschließbar ist.

10. Armlehne nach Anspruch 9, **dadurch gekennzeichnet, daß** der Deckel (18) durch eine an der Armlehnenstirnseite angeordnete federkraftbeaufschlagte Verriegelungstaste (20) in Schließstellung haltbar ist.

11. Armlehne nach Anspruch 1 oder einem der nachfolgenden Ansprüche, **dadurch gekennzeichnet, daß** der Stützfuß (4) eine Verkleidung aufweist, die die Armlehnenverkleidung (14) im Bereich der Schwenkgelenke teilweise überdeckt.

## Claims

1. Pivotable armrest for motor vehicle seats having an armrest-carrying part (1), an arm support part (19) and a storage space (15), the armrest-carrying part (1) being connected to a spatially fixed supporting foot (4) in an articulated manner for the purpose of being arranged pivotably thereon, having latching teeth (8) which are arranged in a spatially fixed manner on the supporting foot (4) in a predetermined angular region concentrically around the pivot axis, and a counterlatch element, which is arranged actuably on the armrest-carrying part (1) and is in operative connection with the latching teeth (8), for the pivoting positioning of the armrest-carrying part (1), **characterized in that** the supporting foot (4) has, on the armrest side, two spaced-apart side parts (5) for the pivotable mounting of the armrest-carrying part (1), and **in that** a pivot joint, which is without a pin or shaft, preferably of monobloc construction, is designed for the articulated connection between the said armrest-carrying part and the side parts (5).

2. Armrest according to Claim 1, **characterized in that** the armrest-carrying part (1) has two carrying arms (3) which are arranged parallel to each other essentially at the distance of the width of the storage space, are provided with joint shells (2) and with which it is mounted pivotably between the side parts (5) on two bearing bushings (7) arranged there in a respective annular socket (6).

3. Armrest according to Claim 1 or 2, **characterized in that** the joint shells (2) and the joint heads or pins or bushings (7) are in each case an integral part of the side parts (5) of the supporting foot (4) and of the armrest-supporting part (1).

4. Armrest according to Claim 1 or 2, **characterized in that** the supporting arms (3) are a securing means for an armrest lining (14) on which an oddments tray (16) can be arranged, the said tray protruding into the space between the said lining and forming the storage space (15) and also filling the region between the side parts (5) of the supporting foot (4).

5. Armrest according to Claim 2, **characterized in that** a respective latching body (9), which is provided with latching teeth, is arranged on the side parts (5) at a distance from the annular sockets (6), for the counterlatch element.

6. Armrest according to Claim 5, **characterized in that** the supporting foot (4) is of integral design with the side parts (5) and the latching bodies (9) arranged thereon.

7. Armrest according to Claim 1 or 5, **characterized in that** the counterlatch element is a locking catch (10) which is mounted rotatably in the pivoting joint region between the carrying arms (3) and is acted upon by spring force and is actuable in the direction of the latching body (9).

8. Armrest according to Claim 7, **characterized in that** the locking catch (10) can be actuated by a push bar (12) which is coupled to a push button (13) arranged on the end side of the armrest.

9. Armrest according to Claim 4, **characterized in that** the oddments tray (16) can be closed by a cover (18) carrying the arm support part (19).

10. Armrest according to Claim 9, **characterized in that** the cover (18) can be held in the closing position by a locking button (20) which is acted upon by spring force and is arranged on the end side of the armrest.

11. Armrest according to Claim 1 or one of the following claims, **characterized in that** the supporting foot (4) has a lining which partially covers the armrest lining (14) in the region of the pivoting joints.

## Revendications

1. Accoudoir pivotable pour sièges de véhicules automobiles comprenant une partie de support d'accoudoir (1), une partie d'appui pour le bras (19) et un espace de rangement (15), la partie de support d'accoudoir (1) étant raccordée de manière articulée à un pied de support fixe (4) en vue de son agencement à pivotement sur ce dernier, avec, sur le pied de support (4), des dents d'encliquetage (8) disposées fixement dans une zone angulaire prédéterminée concentriquement autour de l'axe de pivotement et un élément d'encliquetage conjugué disposé de manière à pouvoir être actionné sur la partie de support d'accoudoir (1) et en liaison coopérante avec les dents d'encliquetage (8) pour le positionnement pivotant de la partie de support d'accoudoir (1), **caractérisé en ce que** le pied de support (4) présente, du côté de l'accoudoir, deux parties latérales espacées (5) pour le montage pivotant de la partie de support d'accoudoir (1), et **en ce que** pour la liaison articulée entre celle-ci et les parties latérales (5), une articulation pivotante, de préférence sous forme de construction à coque, est réalisée sans axe ni arbre.

2. Accoudoir selon la revendication 1, **caractérisé en ce que** la partie de support d'accoudoir (1) présente deux bras de support (3) disposés essentiellement à la distance de la largeur de l'espace de rangement parallèlement l'un à l'autre et pourvus de coques d'articulation (2), avec lesquels bras de support il est monté à pivotement entre les parties latérales (5) sur deux coussinets (7) disposés chacun dans un logement annulaire (6).

3. Accoudoir selon la revendication 1 ou .2, **caractérisé en ce que** les coques d'articulation (2) et les têtes d'articulation ou les tourillons ou les coussinets (7) font chacun partie intégrante des parties latérales (5) du pied de support (4) et de la partie de support d'accoudoir (1).

4. Accoudoir selon la revendication 1 ou 2, **caractérisé en ce que** les bras de support (3) constituent une fixation pour un habillage d'accoudoir (14), sur lequel on peut disposer une coque de rangement (16) saillant entre ceux-ci dans l'espace et formant l'espace de rangement (15), laquelle remplit aussi la zone entre les parties latérales (5) du pied de support (4).

5. Accoudoir selon la revendication 2, **caractérisé en ce qu'**un corps d'encliquetage (9) pour l'élément d'encliquetage conjugué, pourvu de dents d'encliquetage, est disposé à chaque fois au niveau des parties latérales (5) à une certaine distance des logements annulaires (6).

6. Accoudoir selon la revendication 5, **caractérisé en ce que** le pied de support (4) est réalisé d'une pièce avec les parties latérales (5) et les corps d'encliquetage (9) disposés sur celles-ci.

7. Accoudoir selon la revendication 1 ou 5, **caractérisé en ce que** l'élément d'encliquetage conjugué est un cliquet de verrouillage (10) sollicité par la force d'un ressort et actionnable dans la direction du corps d'encliquetage (9), monté à rotation dans la zone d'articulation pivotante entre les bras de support (3).

8. Accoudoir selon la revendication 7, **caractérisé en ce que** le cliquet de verrouillage (10) est actionnable par une tige-poussoir (12) qui est accouplée à un bouton poussoir (13) disposé du côté avant de l'accoudoir.

9. Accoudoir selon la revendication 4, **caractérisé en ce que** la coque de rangement (16) peut être verrouillée par un couvercle (18) portant la partie d'appui pour le bras (19).

10. Accoudoir selon la revendication 9, **caractérisé en ce que** le couvercle (18) peut être fixé dans la position de verrouillage par un bouton de verrouillage (20) sollicité par la force d'un ressort, disposé sur le côté avant de l'accoudoir.

11. Accoudoir selon la revendication 1 ou l'une quelconque des revendications suivantes, **caractérisé en ce que** le pied de support (4) présente un habillage qui recouvre partiellement l'habillage de l'accoudoir (14) dans la zone de l'articulation pivotante.
